Europäisches Patentamt

European Patent Office

Office européen des brevets

(19)

(11) Veröffentlichungsnummer: **0 093 191**

**A1**

(12) # EUROPÄISCHE PATENTANMELDUNG

(21) Anmeldenummer: **82104466.6**

(22) Anmeldetag: **21.05.82**

(51) Int. Cl.³: **G 05 D 16/06**

(30) Priorität: **29.04.82 DE 3215972**

(43) Veröffentlichungstag der Anmeldung:
**09.11.83 Patentblatt 83/45**

(84) Benannte Vertragsstaaten:
**AT BE CH DE FR GB IT LI LU NL SE**

(71) Anmelder: **Leybold-Heraeus GmbH**
**Bonner Strasse 504 Postfach 51 07 60**
**D-5000 Köln 51(DE)**

(72) Erfinder: **Koopmann, Gerd, Dr.**
**Heideweg 1 a**
**D-5064 Rösrath(DE)**

(72) Erfinder: **Limp, Hans**
**Schillingsrotter Strasse 50**
**D-5000 Köln 50(DE)**

(74) Vertreter: **Leineweber, Jürgen, Dipl.-Phys.**
**Bonner Strasse 504 Postfach 51 07 60**
**D-5000 Köln 51(DE)**

(54) Druckregler.

(57) Die Erfindung bezieht sich auf einen Druckregler, der zwischen einen Rezipienten und eine Vakuumpumpe anzuordnen ist und die Aufgabe hat, den Druck innerhalb des Rezipienten konstant zu halten. Im Druckreglergehäuse (1) ist eine Membran (7) untergebracht; auf der einen Seite der Membran befindet sich eine Referenzdruckkammer (8); auf der anderen Seite der Membran befinden sich eine erste Kammer (23), die mit dem zum Rezipienten führenden Anschluß (4) in Verbindung steht, sowie eine zweite Kammer (21), die mit dem zur Pumpe führenden Anschluß (3) in Verbindung steht; die Membran (7) dient als Steuerelement zur Verbindung oder Trennung der beiden Kammern (21, 23).

82.013

LEYBOLD-HERAEUS GMBH

Köln-Bayental

Druckregler

Die Erfindung bezieht sich auf einen zwischen einen Rezipienten und eine Vakuumpumpe anzuordnenden Druckregler mit einer im Druckreglergehäuse untergebrachten Membran.

Druckregler haben generell die Aufgabe, den Druck innerhalb eines Rezipienten konstant zu halten. Bei im Grob- und Feinvakuum arbeitenden Anlagen wird diese Aufgabe häufig mit Hilfe von Schaltgeräten, mit denen zwei druckbezogene Schaltpunkte eingestellt werden, gelöst. Bei Erreichen des unteren Schaltpunktes wird ein zwischen dem Druckregler und der Vakuumpumpe liegendes Ventil geschlossen. Danach steigt der Druck im Vakuumbehälter durch Leckeinströmungen oder durch Gasabgabe von den Wänden wieder an und erreicht nach einer gewissen Zeit den oberen Schaltpunkt. Zu diesem Zeitpunkt wird dann das pumpenseitige Ventil wieder geöffnet.

Aus der DDR-Patentschrift 81 252 ist es weiterhin bekannt, einen vorbestimmten Druck durch Steuerung der Drehzahl der Vakuumpumpe einzuhalten. Schließlich ist aus der GB-PS 14 55 218 ein Druckregler für Vakuumsysteme bekannt, bei dem - unter anderem durch eine Membran gesteuert - ein bestimmter Druck dadurch konstant gehalten wird, daß mit Hilfe des Reglers ständig Luft in der jeweils erforderlichen Menge eingelassen wird.

Nachteilig an den vorbekannten Lösungen ist, daß sie zum Teil aufwendige Regelmimiken benötigen (Drehzahlkontrolle) und/oder mit elektrischen Spannungen arbeiten, was einen Einsatz in explosionsgefährdeten Bereichen oder chemisch aggressiver Umgebung nicht zuläßt. Der Einlaß von Außenluft nach der GB-PS 14 55 218 kommt bei den meisten Grob- oder Feinvakuum-Anlagen (oder auch hoch- und U rahochvakuum-Anlagen) nicht infrage, da Luft kondensierbare Gase enthält, die den in den Anlagen ablaufenden Prozeß stören wüı . Der Druckregler nach der GB-PS 14 55 218 is deshalb auch im wesentlichen für die Verwendung in Melkanlagen gedacht, bei denen z. B. mitangesaugte Wasserdampf nicht stört.

Der vorliegenden Erfindung liegt die Aufgabe zugrunde, einen Druckregler der eingangs genannten Art zu schaffen, der ausschließlich mechanisch arbeitet, einfach aufgebaut ist und eine hohe Empfindlichkeit besitzt.

Erfindungsgemäß wird diese Aufgabe dadurch gelöst, daß innerhalb des Gehäuses des Druckreglers auf der einen Seite der Membran eine Referenzdruckkammer und auf der anderen Seite der Membran eine erste Kammer, die mit dem zum Rezipienten führenden Anschluß in Verbindung steht, sowie eine zweite Kammer, die mit dem zur Pumpe führenden Anschluß in Verbindung steht, untergebracht sind und daß die Membran als Steuerelement zur Verbindung oder Trennung der beiden Kammern dient. Vorzugsweise ist die Membran elastisch und bildet selbst das Verschlußorgan. Ein in dieser Weise ausgebildeter Druckregler benötigt keine elektrischen Hilfsenergien und ist deshalb in chemisch aggressiven oder explosionsgefährdeten Umgebungen einsetzbar. Die Materialauswahl ist aufgrund des einfachen mechanischen Aufbaus insofern erleichtert, als ohne Randbedingungen Materialien eingesetzt werden können, die eine hohe Medienverträglichkeit und Temperaturfestigkeit besitzen. Überraschenderweise besitzt das Funktionselement des Reglers eine sehr hohe Empfindlichkeit und kann deshalb bei Regelabweichungen Reaktionszeiten erreichen, die deutlich kleiner sind als die Reaktionszeiten, die bei Regelkreisen mit Ventilen als Stellglieder bekannt sind.

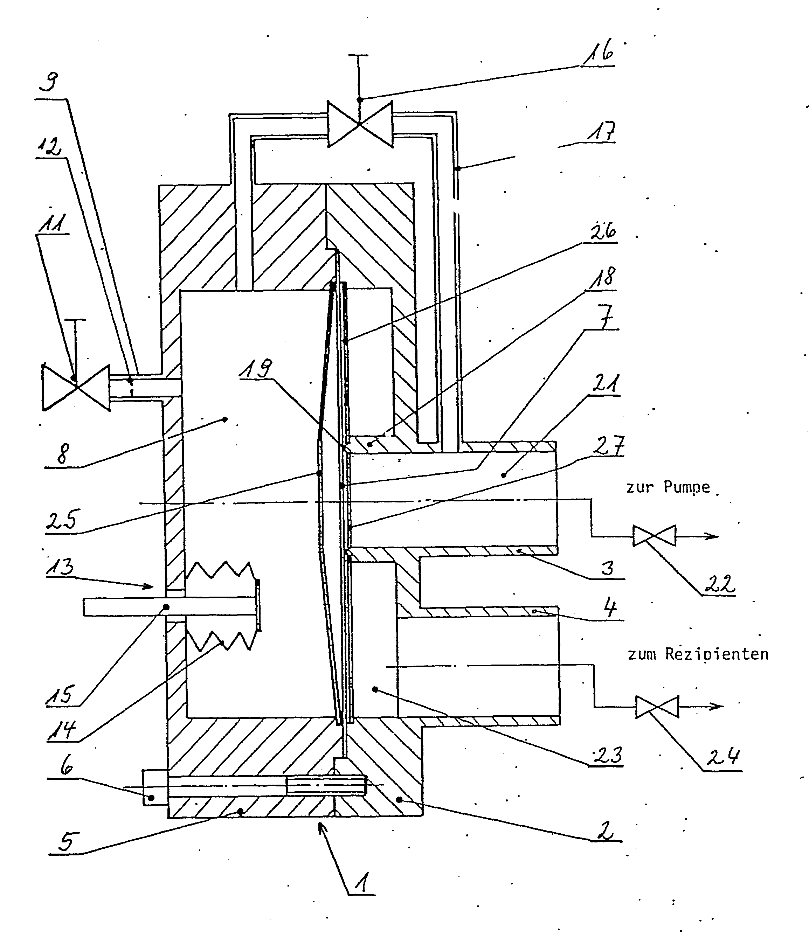

Weitere Vorteile und Einzelheiten der Erfindung sollen anhand eines in der Figur dargestellten Ausführungs- beispiels erläutert werden.

Der dargestellte Druckregler umfaßt ein vorzugsweise aus Edelstahl bestehendes Gehäuse 1, das im wesentlichen aus einem Flanschteil 2 mit zur Vakuumpumpe bzw. zum Rezipienten führenden Anschlußstutzen 3 und 4 sowie einem Deckel 5 besteht. Zwischen diesen beiden mittels mehrerer Schrauben 6 miteinander verbundenen Teilen ist die Membran 7 eingespannt. Dadurch entsteht - beim dargestellten Ausführungsbeispiel - auf der linken Seite der Membran 7 eine Kammer 8, die als Referenzdruckkammer dient. Sie weist einen Anschluß 9 mit einem Ventil 11 auf. Über dieses Ventil 11 kann das Auspumpen und Fluten (Einstellen auf Solldruck) der Referenzdruckkammer erfolgen und zwar unabhängig von den Zuständen in der Pumpe und im Rezipienten. Es kann z. B. über dieses Ventil der Regeldruck mit einem prozeßfremden Gas eingestellt oder der Solldruck während des Prozesses verändert werden.

Im Anschlußstutzen 9 ist außerdem noch eine Drossel 12 vorgesehen, die die Einstellung des Solldruckes erleichtert.

Weiterhin ist der Referenzdruckkamer 8 noch eine Vorrichtung 13 zur Feineinstellung des Solldruckes während des Betriebes zugeordnet. Diese besteht aus einem vorzugsweise von einem Balg gebildeten Verdrängungskörper 14, der mittels des Stempels 15 unterschiedlich tief in die Referenzdruckkammer eingebracht werden kann. Das geschieht vorzugsweise mit Hilfe einer nicht dargestellten Stellschraube, die auf dem Stempel 15 mittels eines Feingewindes geführt ist.

Über eine mit einem Ventil 16 ausgerüstete Verbindungsleitung 17 kann die Referenzdruckkammer 8  mit dem zur Vakuumpumpe führenden Anschlußstutzen 3 verbunden werden. Dadurch ist es weiterhin möglich, die Referenzdruck- kammer 8 - bei entsprechendei Stellung de Ventile - zu evakuieren, um z. B. die Referenzdruckkammer 8 voll- ständig auszupumpen und damit rnerwünschte kondensierbare Pr 'gase zu entfernen. Auch die Einstellung des g ..sch- ten Solldruckes kann dabei vorgenommen werden.

Der zur Vakuumpumpe führende Anschlußstutzen 3 weist eine rohrabschnittförmige, in das Innere des Gehäuses 1 hineinragende Verlängerung 18 auf, dessen Stirnseite 19 etwa in der Ebene der Membran liegt und nach Art eines Ventilsitzes (z. B. mit einem Wulst ausgerüstet) gestaltet ist. Anschlußstutzen 3 und Rohrabschnitt 18 sind zentral in bezug auf das Gehäuse 1 angeordnet und bilden eine Kammer 21, die über ein Ventil 22 mit der Vakuumpumpe in Verbindung steht. Dadurch bildet der Rohrstutzen 18 eine diesen ringförmig umgebende weitere Kammer 23, die über den Anschlußstutzen 4 und das Ventil 24 mit dem Rezipienten in Verbindung steht. Die Abmessungen sind so gewählt, daß die der Ringkammer 23 zugeordnete Fläche der Membran 7 wesentlich größer ist als die der zentralen Kammer 21 zugeordnete Fläche, wodurch ein "Kleben" der Membran 7 auf der Stirnseite 19 des Rohrstutzens 18 nicht eintreten kann.

Die Membran 7 besteht zweckmäßigerweise aus einem Material, das eine hohe Verträglichkeit mit chemischen Gasen hat. Solche Materialien sind z. B. Polyurethan, Perbunan, Tetrafluorchlorkohlenstoff, Silikon oder ähnliches. Zur Vermeidung einer Überdehnung der Membran sind mit Durchbrechungen versehene Stützflächen 25, 26 und 27 vorgesehen. Auf der Seite der Referenzdruckkammer 8 hat die Stützfläche 25 im wesentlichen die Form eines flachen Kegelstumpfes. Die Stützfläche 26 ist ringförmig und vermeidet eine Überdehnung der Membran in die Kammer 23 hinein. Für die der Kammer 21 zugewandte Fläche der Membran 7 ist die Stützfläche 27 vorgesehen.

Zur Funktion: Wie bereits erwähnt, kann der Solldruck in der
Referenzdruckkammer 8 entweder über den Anschlußstutzen 9
der über die Leitung 17 voreingestellt und mittels
der Feinregelung 13 während des Betriebes nachgeregelt
werden. Während des Betriebes, d. h. bei geöffneten
Ventilen 22 und 24, gibt dann die Membran die Öffnung des
Rohrstutzens 18 so lange frei, wie der Druck im Rezipienten
größer ist als der Druck in der Referenzdruckkammer 8. Wird
der Referenzkammerdruck im Rezipienten erreicht und unterschritten, schließt die Membran 7 die durch die Stirnseite
19 des Stutzens 18 gebildete Öffnung und trennt damit
die Vakuumpumpe vom Rezipienten. Insgesamt ist die Wirkung
derart, daß das effektive Saugvermögen am Rezipienten
proportional zur Druckdifferenz zwischen dem Rezipienten
und der Referenzdruckkammer eingestellt wird. Je nach Art
und Größe des erfindungsgemäßen Druckreglers ist der Gasdurchsatzbereich regelbar zwischen 0 und mehr als 100 $m^3$/h.
Dadurch ist der erfindungsgemäße Regler für Prozeßrezipienten im Grobvakuumbereich besonders gut geeignet.

LEYBOLD-HERAEUS GMBH

Köln-Bayental

Druckregler

ANSPRÜCHE

1. Zwischen einen Rezipienten und eine Vakuumpumpe anzuordnender Druckregler mit einer im Druckreglergehäuse untergebrachten Membran, d a d u r c h   g e k e n n - z e i c h n e t ,   daß im Gehäuse (1) auf der einen Seite der Membran (7) eine Referenzdruckkammer (8) und auf der anderen Seite der Membran eine erste Kammer (23), die mit dem zum Rezipienten führenden Anschluß (4) in Verbindung steht, sowie eine zweite Kammer (21), die mit dem zur Pumpe führenden Anschluß (3) in Verbindung steht, untergebracht sind und daß die Membran (7) als Steuerelement zur Verbindung oder Trennung der beiden Kammern (21, 23) dient.

2. Druckregler nach Anspruch 1, d a d u r c h   g e k e n n - z e i c h n e t ,   daß die Membran (7) elastisch ist und selbst das Verschlußorgan bildet.

3. Druckregler nach Anspruch 1 oder 2, d a d u r c h   g e k e n n z e i c h n e t ,   daß die der ersten Kammer (23) zugeordnete Fläche der Membran (7) größer ist als die der zweiten Kammer (21) zugeordnete Fläche der Membran.

4. Druckregler nach einem der vorhergehenden Ansprüche, d a d u r c h   g e k e n n z e i c h n e t ,   daß die erste Kammer (23) als Ringkammer ausgebildet ist und daß die zweite Kammer (21) von einem die Innenseite der Ringkammer (23) bildenden Rohrstutzen (18) gebildet wird.

5. Druckregler nach einem der vorhergehenden Ansprüche, d a d u r c h  g e k e n n z e i c h n e t , daß der Membran (7) auf beiden Seiten Stützflächen (25, 26 und 27  zugeordnet sind.

6. Druckregl.. nach einem der vorhergehenden Ansprüche, d a d u r c h  g e k e n n z e i c h n e t ,  daß die 'embran (7) aus einem durch hohe Verträglichkeit gegen chemische Gase gekennzeichneten Material (Polyurethan, Perbunan, Tetrafluorchlorkohlenstoff, Silikon oder ähnlichem) besteht.

7. Druckregler nach einem der vorhergehenden Ansprüche, d a d u r c h  g e k e n n z e i c h n e t , daß die Referenzdruckkammer (8) mit der zweiten Kammer (21) über eine mit einem Verschlußventil (16) ausgerüstete Leitung (17) in Verbindung steht.

8. Druckregler nach einem der vorhergehenden Ansprüche, d a d u r c h  g e k e n n z e i c h n e t ,  daß der Referenzdruckkammer (8) ein Blüftungsventil (11) zugeordnet ist.

9. Druckregler nach Anspruch 8,  d a d u r c h  g e k e n n z e i c h n e t ,  daß zwischen Belüftungsventil (11) und Referenzdruckkammer (8) eine Drossel (12) angeordnet ist.

10. Druckregler nach einem der vorhergehenden Ansprüche, d a d u r c h  g e k e n n z e i c h n e t ,  daß der Referenzdruckkammer (8) eine Vorrichtung (13) zur Feineinstellung des Regeldruckes während des Betriebes zugeordnet ist.

11. Druckregler nach Anspruch 10,  d a d u r c h  g e k e n n z e i c h n e t ,  daß die Vorrichtung (13) zur Feineinstellung des Regeldruckes aus einem unterschiedlich tief in die Referenzdruckkammer (8) einbringbaren Verdrängungskörper (14) besteht.

12. Druckregler nach einem der vorhergehenden Ansprüche, d a d u r c h   g e k e n n z e i c h n e t ,   daß er jeweils über e.. Ventil (22, 24) mit der Pumpe und mit dem Rezipienten verbunden ist.

zur Pumpe

zum Rezipienten

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DD-A- 81 252 (J. STANDFEST) --- | | G 05 D 16/06 |
| D,A | GB-A-1 455 218 (ALFA-LAVAL AB) --- | | |
| A | DE-U-8 002 889 (F. RATHKE) * Ganzes Dokument * --- | 1-4 | |
| A | DE-U-7 822 216 (FILTERWERK MANN & HUMMEL GMBH) * Figur 1; Anspruch 1 * --- | 1 | |
| A | DE-A-1 650 285 (BOPP & REUTHER GMBH) * Figur 1; Ansprüche 1, 3 * --- | 1,5 | RECHERCHIERTE SACHGEBIETE (Int. Cl. ³) |
| A | CH-A- 592 836 (SANDOZ AG) * Figur 2A; Anspruch I * ----- | 1 | G 05 D 16/00 F 16 K 31/00 |

Der vorliegende Recherchenbericht wurde für alle Patentansprüche erstellt.

| Recherchenort BERLIN | Abschlußdatum der Recherche 05-08-1983 | Prüfer BEYER F |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82